# EUROPEAN PATENT SPECIFICATION

(11) **EP 0 865 824 B1**
(45) Date of publication and mention of the grant of the patent: **19.05.2004**
(21) Application number: 98810167.1
(22) Date of filing: 02.03.1998
(51) Int. Cl.: B01L 3/02, B01L 3/00

(54) **Micromechanical pipetting device**
Mikromechanische Pipettiervorrichtung
Dispositif de pipetage micromécanique

(30) Priority: 20.03.1997 EP 97104756
(43) Date of publication of application: 23.09.1998
(73) Proprietor: F. HOFFMANN-LA ROCHE AG, 4070 Basel (CH)
(72) Inventor: Buser, Rudolf, 8032 Zürich (CH); Szita, Nicolas, 8008 Zürich (CH); Baader, Felix, 6113 Menzingen (CH); Burger, Jürgen, 2563 Ipsach (CH); Elsenhans, Olivier, 8916 Jonen (CH)
(74) Representative: Ventocilla, Abraham

(56) References cited:
- EP-A- 0 725 267
- PATENT ABSTRACTS OF JAPAN vol. 095, no. 011, 26 December 1995 & JP 07 213926 A (HITACHI KOKI CO LTD), 15 August 1995,
- GRAVESEN P ET AL: "MICROFLUIDICS - A REVIEW" JOURNAL OF MICROMECHANICS & MICROENGINEERING, vol. 3, 1993, pages 168-182, XP000601274
- PATENT ABSTRACTS OF JAPAN vol. 096, no. 012, 26 December 1996 & JP 08 219956 A (HITACHI KOKI CO LTD;HITACHI LTD), 30 August 1996,
- PATENT ABSTRACTS OF JAPAN vol. 097, no. 003, 31 March 1997 & JP 08 290377 A (PRIMA MEAT PACKERS LTD), 5 November 1996,

## Description

The invention relates to a micromechanical pipetting device for pipetting liquid volumes in a range between a minimum value smaller than a microliter and a maximum value of about 10 microliters comprising an integrally built pipetting module which has an inlet/outlet which is either apt to be connected to a removable pipetting tip or is integrally built with a pipetting tip, said integrally built pipetting module comprising a micromechanical structure which is integrally built on a silicon wafer.

Some micromechanical structures are known for the purpose of dispensing very small volumes of liquid.

A micromechanical pump comprising valves can be used for this purpose, but high accuracy of the dispensed volumes cannot be attained, mainly due to the reflow caused by the operation of the valves and dead volumes and leaking problems associated with the use of valves. Moreover such micropumps normally pump a number of liquid portions until the desired volume to be dispensed is approximately attained. Thus the accuracy of the total volume dispensed depends from the accuracy of the volume portion transported by each pumping step.

A similar approach can be also implemented by dispensing microdrops (ink-jet principle) until the desired volume to be dispensed is approximately attained. Also in this case the accuracy of the total volume dispensed depends from the accuracy of the volume of each microdrop. The accuracy of pipetted volume obtained by this approach is limited, in particular because it depends from the properties of the liquid being pipetted.

Another known approach for dispensing very small volumes of liquid is the use of a micromechanical pump controlled by a feedback loop comprising an anemometric flow sensor and an integrator of the output signal of this sensor. The function of the feedback loop is to measure the volume pumped by the micromechanical pump and to control it accordingly. Thus in theory the feedback loop would control the micromechanical pump in such a way that the latter pumps a steady flow of liquid over an interval of time until the desired volume to be dispensed is attained and then the operation of the pump is stopped. This approach has several important disadvantages. There is always a delay between the measurement of the pumped volume and a corresponding control of the micromechanical pump. Thus a correction of the operation of the pump via feedback loop only happens after the pumped volume is already larger than the desired value. Such a device is therefore not accurate enough for pipetting very small volumes with high accuracy. The operation of anemometric flow sensors requires heating of the liquid pumped. Thus such a device cannot be used for pumping thermally sensitive liquids of the kind to be pipetted e.g. in clinic chemistry analyzers.

JP-A- 07213926 discloses a pipetting device which amount of suction and injection is controlled by straining a membrane consisting of an electrically conductive thin sheet by varying the electrostatic forces generated by an electrostatic actuator. The system does not comprise any sensor means for generating a signal related to the displacement of the membrane.

The aim of the invention is therefore to provide a micromechanical pipetting device for pipetting with high accuracy very small volumes of liquids and with which the above-mentioned disadvantages of known prior art devices can be avoided.

According to the invention, this aim is attained with a device of the type defined in the introduction of this specification, which device is characterized in that it comprises
a) a first chamber located within said pipetting module, the volume comprised within said first chamber being apt to be modified by displacement of a membrane which is a portion of a wall of said chamber, said first chamber having only one opening, said opening being permanently open and allowing fluid flow into and from the interior of said first chamber,
b) a channel located within said pipetting module, said channel establishing a direct, valveless and permanent fluidical connection between said opening of the first chamber and the inlet/outlet of the pipetting module,
c) actuator means for displacing said membrane, and thereby aspiring or expelling a volume of air or of a liquid into or from said first chamber, which in turn causes aspiring or expelling a volume of a liquid sample into respectively from said pipetting tip, and
d) first sensor means for generating a first output signal related to the displacement of the membrane.

The main advantage of the device according to the invention as compared with the prior art devices is that it makes possible to pipette very small volumes of liquid with high accuracy, reproducibility, reliability and fast performance.

In particular the inclusion of first sensor means for generating a first output signal related to the displacement of the membrane makes it possible a highly accurate and real-time monitoring of the operation of the device which is suitable for the fast forward and reverse flow in a pipetting device according to the invention.

Moreover, the device according to the invention advantageously differs from prior art devices in that it makes possible to pipette the entire volume to be pipetted by a single stroke of the actuator means.

A preferred embodiment of the device according to the invention is characterized in that the further comprises control means for controlling the operation of the actuator means in response to the first output signal generated by the first sensor means. The micropipetting module according to the invention and the means for controlling the operation of the actuator means are preferably so configured and dimensioned that the total volume to be aspired and dispensed with the pipetting tip is aspired into the pipetting tip by means of a single stroke of the displacement movement of the membrane.

Another preferred embodiment of the device according to the invention is characterized in that a portion of the membrane is part of the first sensor means and the first output signal generated by this sensor means is representative of the displacement of the membrane.

A further preferred embodiment of the device according to the invention is characterized in that a portion of the channel is part of the first sensor means and the first output signal generated by this sensor means is related to the displacement of the membrane.

A further preferred embodiment of the device according to the invention is characterized in that a portion of the channel forms a second chamber and is part of a second sensor means for generating a second output signal representative of the pressure in the channel, and the means for controlling the operation of the actuator means control the actuator means in response to both the first and the second output signals.

A further preferred embodiment of the device according to the invention is characterized in that a portion of the channel forms a second chamber and is part of a second sensor means for generating a second output signal representative of the fluid flow through the channel, and the means for controlling the operation of the actuator means control the actuator means in response to both the first and the second output signals.

The above mentioned preferred embodiments which include the association of multifunctional sensors located close to the pipetting tip make possible a direct and highly accurate monitoring of very small pipetted volumes and an early and active recognition and avoiding of malfunctions of the micropipetting module

A further preferred embodiment of the device according to the invention is characterized in that a portion of the channel forms a third chamber which is located between the pipetting tip and the first or the second sensor means, said third chamber serving for preventing that pipetted fluid may contact the portion of the channel which comprises said first sensor means or said second sensor means.

A further preferred embodiment of the device according to the invention is characterized in that said actuator means comprises an electrostatic actuator or a piezoelectric actuator or an electromechanical actuator.

A further preferred embodiment of the device according to the invention is characterized in that said first sensor means is a capacitive or an electro-optical sensor.

A further preferred embodiment of the device according to the invention is characterized in that said second sensor means comprises a pressure or a flow measurement sensor. The use of an integrated pressure sensor according to the instant invention ensures that the pipetting module operates in the normal range (e.g. of viscosity) for which the system is designed for.

A further preferred embodiment of the device according to the invention is characterized in that a plurality of said pipetting modules is integrally built on a silicon wafer.

A further preferred embodiment of the device according to the invention is characterized in that the pipetting tip is a silicon pipetting tip integrally built with the pipetting module.

Exemplified embodiments of the invention are described below with reference to the accompanying drawings wherein:
Fig. 1a is a schematic view of a an array of micromechanical modules formed on a silicon wafer, which modules can be used as component of a first embodiment of a micromechanical pipetting device 11 according to the invention.
Fig. 1b is a schematic view of a first embodiment 11 of a micromechanical pipetting module according to the invention.
Fig. 2 is a schematic representation of a cross-section on the line C-C in Fig. 1b.
Fig. 3 is a partial representation of a cross-section on the line A-A in Fig. 1b.
Fig. 4a is a schematic view of a an array of micromechanical modules formed on a silicon wafer, which modules can be used as component of a second embodiment 41 of a micromechanical pipetting module according to the invention.
Fig. 4b is a schematic view of a second embodiment 41 of a micromechanical pipetting module according to the invention.
Fig. 5 is a partial representation of a longitudinal section on the line C-C in Fig. 4b.
Fig. 6 is a partial representation of a cross-section on the line A-A in Fig. 4b.
Fig. 7 is a partial representation of a cross-section on the line B-B in Fig. 4b.
Fig. 8 is a longitudinal section on the line C-C of Figure 4b of a third embodiment of a micromechanical pipetting module according to the invention.
Fig. 9 is a longitudinal section of a fourth embodiment of a micromechanical pipetting module according to the invention.
Fig. 10 is a longitudinal section of a fifth embodiment of a micromechanical pipetting module according to the invention.

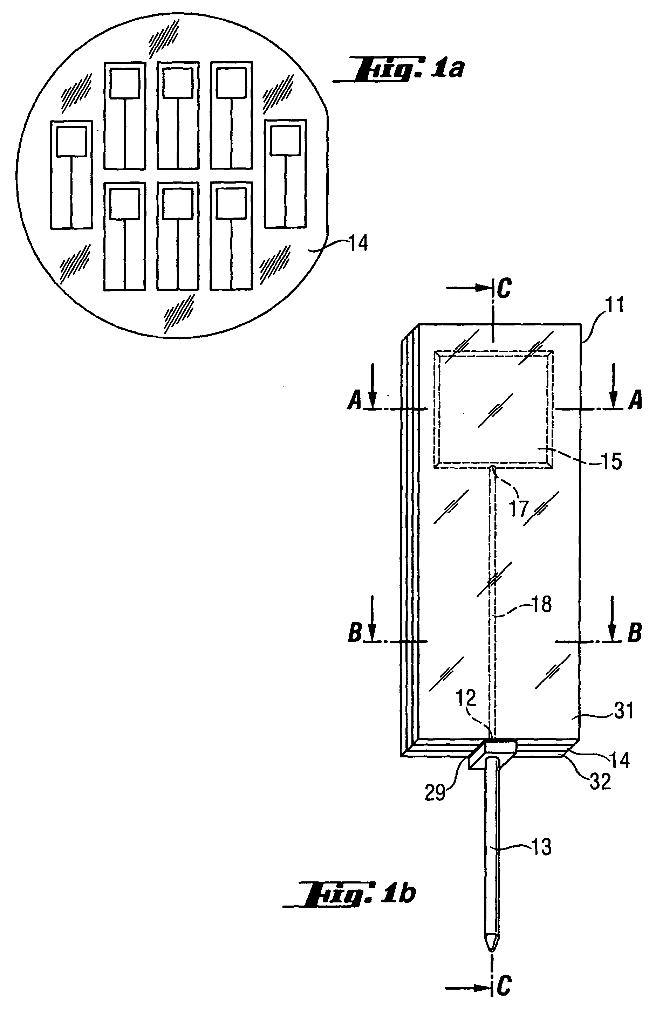

Fig. 1a shows schematically a silicon wafer 14 on which an array of micromechanical modules has been formed. Each of such modules can be used as a component of a of a first embodiment 11 of a micromechanical pipetting module according to the invention.

Fig. 1b shows schematically a first embodiment 11 of a micromechanical pipetting module according to the invention. Liquid volumes in a range between a minimum value smaller than a microliter and a maximum value of about 10 microliters can be pipetted with such a module. Module 11 is an integrally built pipetting module comprising a micromechanical structure which is integrally built on a silicon wafer 14.

The micromechanical pipetting module 11 shown by Fig. 1b comprises three layers arranged one above the other and connected to one another unreleasably by means of anodic bonding: a first glass layer 31, a second glass layer 32 and a silicon wafer layer 14 arranged between glass layers 31 and 32. Silicon wafer layer 14 is unreleasably connected to glass layers 31 and 32 by means of anodic bonding. Silicon wafer layer 14 in Fig. 1b has a surface of approximately 25 x 10 mm² for the smaller volumes of the target range (minimum value smaller than a microliter and a maximum value of about 10 microliters).

Silicon wafer layer 14 comprises a chamber 15 and a channel 18 formed by micromachining on wafer 14. The bottom wall of chamber 15 is a membrane 16 which is part of silicon wafer 14. Chamber 15 has only one opening 17 which is connected to one end of channel 18. The opposite end of channel 18 forms an inlet/outlet 12 of pipetting module 11. A pipetting tip 13 is connected to inlet/outlet 12 by means of a sealing film 29.

In an alternative embodiment layers 31 and 32 are also fabricated in silicon. This offers the advantage of reducing undesirable temperature effects. In this alternative embodiment the bonding process is called "silicon direct bonding". The disadvantage of this kind of bonding as compared with anodic bonding with glass wafers is the higher temperature needed for performing the bonding process. A compromise to overcome this difficulty is to sputter a thin layer of pyrex glass onto a silicon wafer and to perform then anodic bonding. Within the scope of the invention the material of layers 31 and 32 can thus be either glass or silicon, whereby for silicon two different bonding processes are possible.

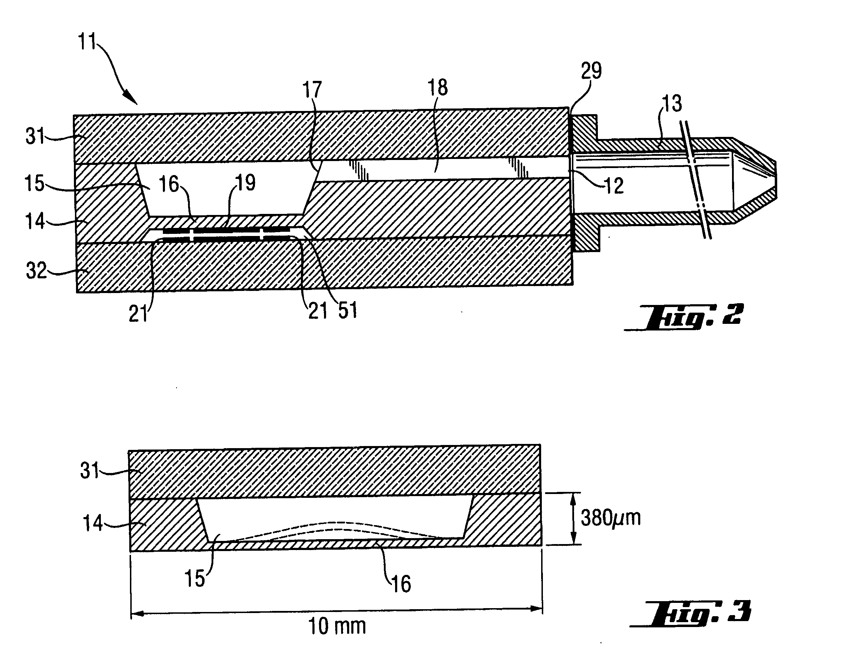

Fig. 2 shows a longitudinal section on the line C-C in Fig. 1b. As shown by Fig. 2 a micromechanical pipetting module 11 shown by Figure 1b comprises chamber 15 having membrane 16 as bottom wall, channel 18, actuator means 19 for displacing membrane 16 and sensor means 21 for generating an output signal related to the displacement of the membrane 16. A portion of the membrane 16 is part of the sensor means 21 and the output signal generated by this sensor means is representative of the displacement of the membrane 16. Components of sensor 21 are located in a chamber 51 delimited by membrane 16, silicon wafer 14 and glass plate 32.

Sensor 21 is preferably a displacement sensor. Sensor 21 in Fig. 2 is a displacement sensor comprising an electrical capacitor as measuring element. Sensor 21 in Fig. 2 can be replaced by an electro-optical sensor.

The volume comprised within chamber 15 is apt to be modified by displacement of a membrane 16. Chamber 15 has only one opening 17 which is permanently open and which allows fluid flow into and from the interior of chamber 15.

Channel 18 establishes a direct, valveless and permanent fluidical connection between opening 17 of chamber 15 and the inlet/outlet 12 of the pipetting module 11.

Actuator means 19 is for instance an electrostatic actuator as schematically represented in Fig. 2, or a piezoelectric actuator. The electrical connections of actuator 19 are not shown in the Figures. Membrane 16 can also be displaced by a pressure increase or decrease of a gas in the chamber formed by membrane 16, silicon wafer 14 and glass plate 32. This pressure change can be achieved on chip e.g. by a thermopneumatical actuation, that is by heating and cooling a gas or by evaporation and condensing of a liquid.

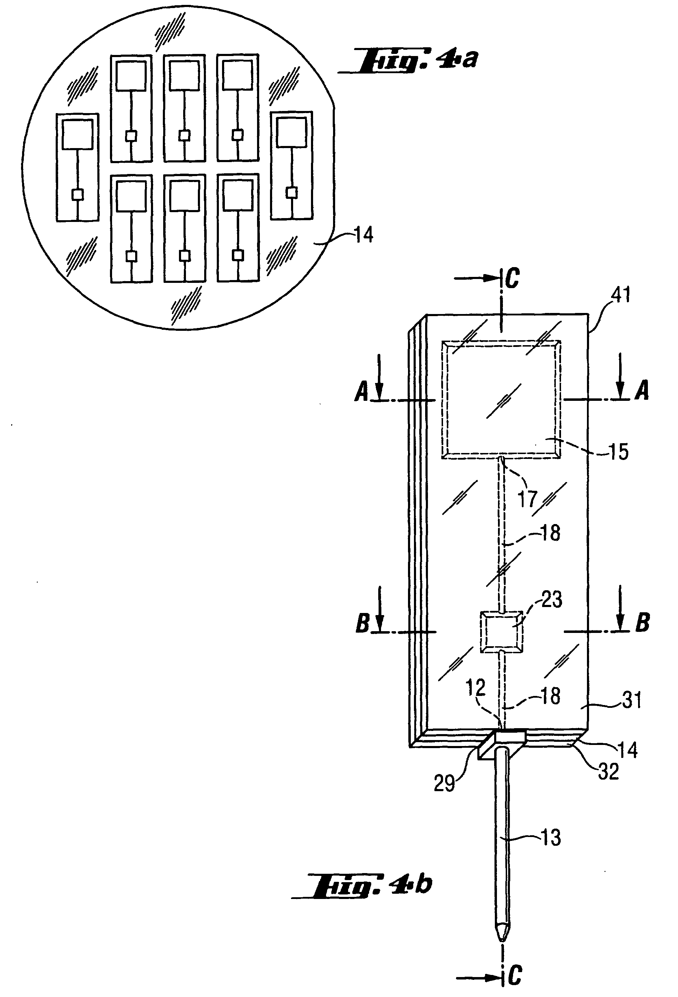

Fig. 3 shows a partial representation of a cross-section on the line A-A in Fig. 1b. Fig. 3 shows in particular the cross-sectional shape of chamber 15 and an example of the width and depth of wafer layer 14 of pipetting module 11. The broken line in Fig. 2 shows the position taken by the membrane 16 when it is displaced e.g. by means of an actuator located below membrane 16, but not represented in Fig. 2.

In order to perform a pipetting operation with the pipetting module 11, actuator means 19 are activated to displace membrane 16 for aspiring or expelling a volume of air or of a liquid into or from chamber 15. Such a displacement of membrane 16 causes a corresponding aspiring or expelling of a volume of a liquid sample into respectively from said pipetting tip 13.

When a pipetting module according to the invention is used to perform pipetting operations the interior of the pipetting module is filled either with air or with a system liquid (e.g. water, separated from the pipetted liquid by an air segment. Sample or reagent is aspired or expelled from the pipetting tip when actuator 19 displaces membrane 16. While pipetting the pipetted liquid (for instance a biological liquid sample or a reagent for performing a clinical chemistry test) does not enter channel 18 but remains within the pipetting tip.

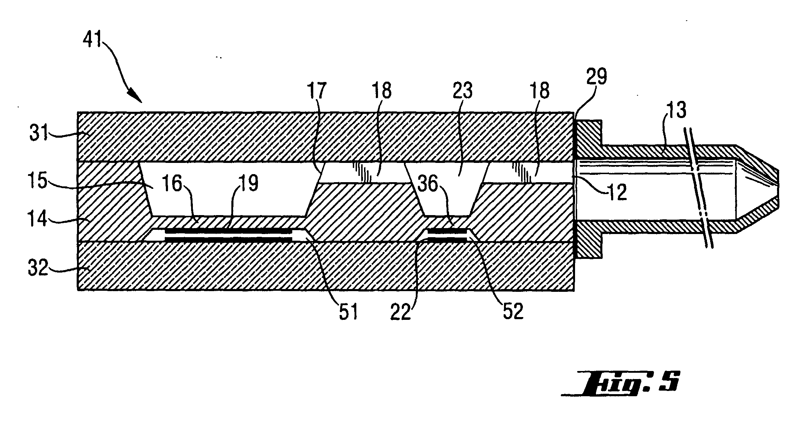

Fig. 4a shows schematically a silicon wafer 14 on which an array of micromechanical modules has been formed. Each of such modules can be used as a component of a of a second embodiment 41 of a micromechanical pipetting module according to the invention.

Fig. 4b shows schematically a second embodiment 41 of a micromechanical pipetting module according to the invention. Liquid volumes in a range between a minimum value smaller than a microliter and a maximum value of about 10 microliters can be pipetted with such a module. Module 41 is an integrally built pipetting module comprising a micromechanical structure which is integrally built on a silicon wafer 14.

As can be appreciated from Fig. 4b micromechanical pipetting module 41 is very similar to micromechanical pipetting module 11 shown by Fig. 1b, but differs therefrom in that in module 41 a portion of the channel 18 forms a chamber 23.

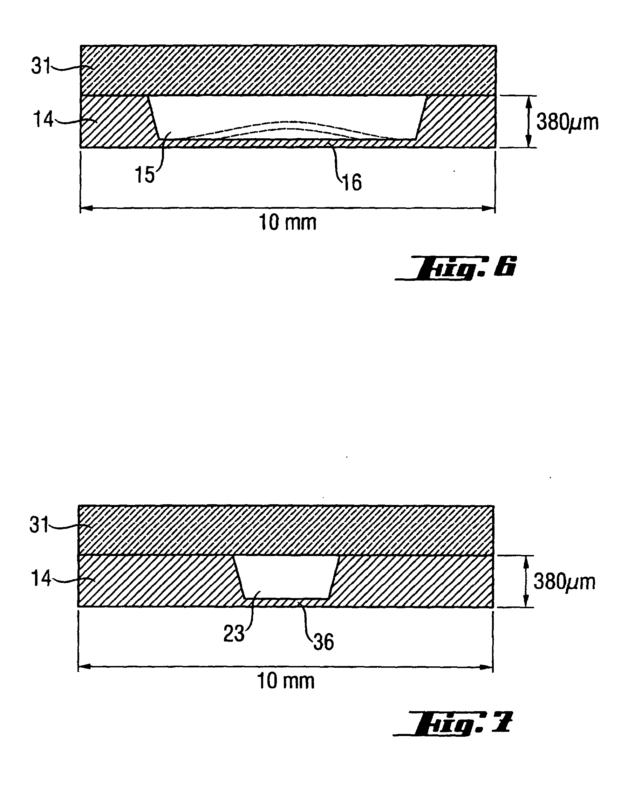

Fig. 5 shows a longitudinal section of micromechanical pipetting module 41 shown by Figure 4b. Micromechanical pipetting module 41 shown by Fig. 5 comprises chamber 15 having membrane 16 as bottom wall, channel 18, actuator means 19 for displacing membrane 16 , a chamber 23 formed by a portion of channel 18, and sensor means 22 for generating an output signal related to the displacement of the membrane 16. A portion of channel 18 is part of sensor means 22 and the output signal generated by this sensor means is related to the displacement of membrane 16. Components of actuator means 19 are located in chamber 51 delimited by membrane 16, silicon wafer 14 and glass plate 32. Components of sensor 22 are located in a chamber 52 delimited by a membrane 36 which is part of silicon wafer 14, silicon wafer 14 and glass plate 32.

Sensor 22 is for instance a pressure sensor or a flow measurement sensor. Sensor 22 in Fig. 5 is pressure sensor comprising an electrical capacitor as measuring element. Sensor 22 can also be a piezoresistive sensor or any other type of pressure sensor.

Sensor 22 can also be used for liquid level detection before aspiration of liquid to be pipetted.

Fig. 6 shows a partial representation of a cross-section on the line A-A in Fig. 4b. Fig. 6 shows in particular the cross-sectional shape of chamber 15 and an example of the width and depth of wafer layer 14 of pipetting module 41. The broken line in Fig. 6 shows the position taken by the membrane 16 when it is displaced e.g. by means of an actuator located below membrane 16, but not represented in Fig. 6.

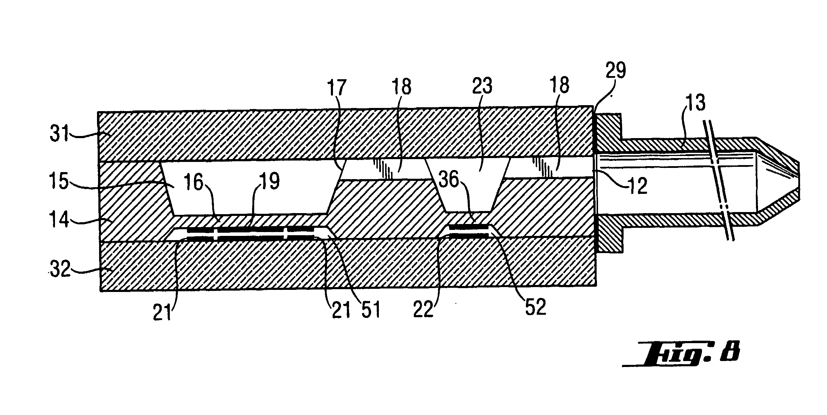

Fig. 7 shows a partial representation of a cross-section on the line B-B in Fig. 4b. Fig. 7 shows in particular the cross-sectional shape of chamber 23 of module 41.

The operation of micromechanical pipetting module 41 is very similar to the operation of module 11 described above with reference to Figures 1a, 1b, 2 and 3 with exception of the fact that in module 41 sensor 22 for producing an output signal related to the displacement of membrane 16 is located under chamber 23, that is at a certain distance from membrane 16, whereas in module 11 sensor 21 for producing such an output signal is located under chamber 15 and directly under membrane 16.

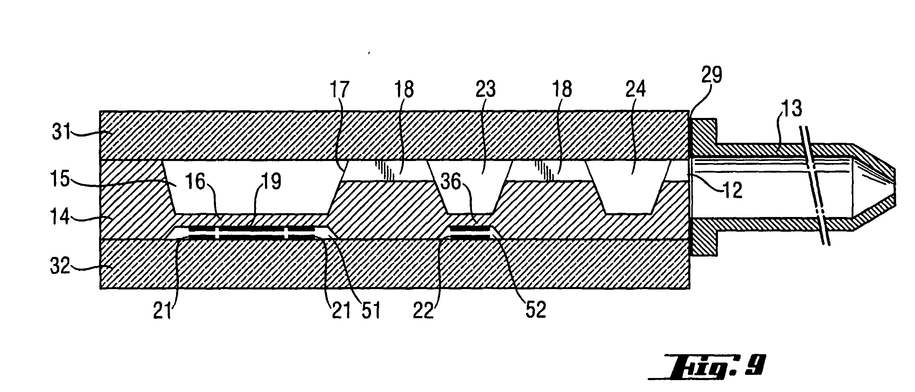

Fig. 8 shows a longitudinal section of a third embodiment of a micromechanical pipetting module according to the invention obtained by modifying the embodiment shown by Fig. 5. The embodiment shown by Fig. 8 differs from the embodiment shown by Fig. 5 in that the embodiment shown by Fig. 8 comprises an additional sensor 21 located adjacent to actuator 19 in chamber 51. Like in the embodiment shown by Fig. 2., Sensor 21 in Fig. 8 is preferably a displacement sensor. Sensor 21 in Figures 2, 8, 9 and 10 is a displacement sensor comprising an electrical capacitor as measuring element. Sensor 21 in Figures 2, 8, 9 and 10 can be replaced by an electro-optical sensor.

Fig. 9 shows a longitudinal section of a fourth embodiment of a micromechanical pipetting module according to the invention obtained by modifying the embodiment shown by Fig. 8. In addition to the features of the embodiment shown by Fig. 8, in the embodiment shown by Fig. 9 a portion of the channel 18 forms a third chamber 24 which is located between outlet 12 of the pipetting module and chamber 23. Chamber 24 serves for preventing that pipetted fluid may contact the portion of the channel 18 which comprises sensor 22.

In a modified version of the embodiment shown by Fig. 2 a chamber similar to chamber 24 in Fig. 9 is located between outlet 12 of the pipetting module and chamber 15. Such a modified version is not represented in the enclosed drawings.

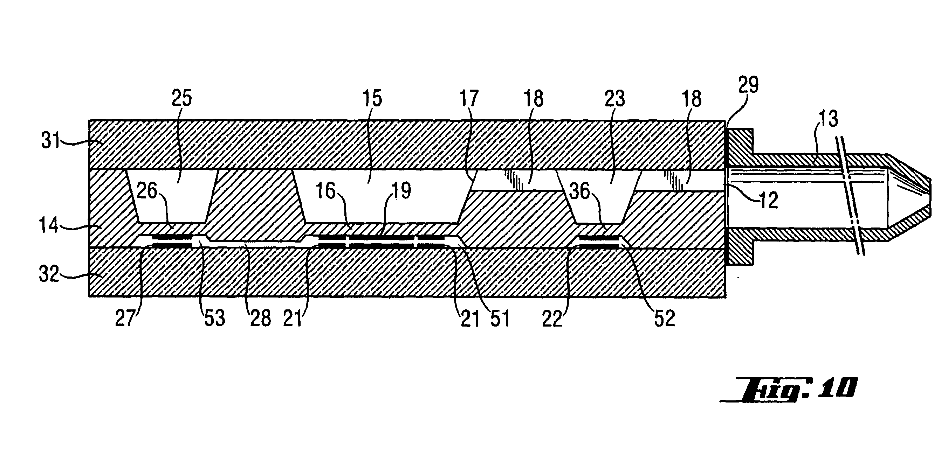

Fig. 10 shows a longitudinal section of a fifth embodiment of a micromechanical pipetting module according to the invention obtained by modifying the embodiment shown by Fig. 8. In addition to the features of the embodiment shown by Fig. 8, the embodiment shown by Fig. 10 has an additional pressure sensor 27 for measuring the pressure on the actuator side, that is in a channel 28 and in the chambers fluidically connected therewith, and an additional chamber 25 delimited by a membrane 26 which is part of silicon wafer 14, silicon wafer 14 and glass plate 31. Chamber 25 located above membrane 26 is a reference chamber for the operation of sensor 27. Channel 28 connects a chamber 53 where pressure sensor 27 is located with the chamber 51 where actuator 19 is located. Pressure sensor 27 is used for monitoring the pressure applied in the case of pneumatic actuation principle, according to which a certain pressure is maintained in the actuator chamber, e.g. by thermopneumatic actuation. This pressure differs from the pressure measured by sensor 22 in that the signal of sensor 22 is modulated by the dynamics and the force of the actuator membrane and the fluidic behavior (i.e. dynamics and gravity) of the aspirated sample liquid and of the system fluid. Sensor 27 is used as part of a control system for maintaining a given (static) pressure by a direct feedback system and monitoring the behavior of the liquid by means including sensors 21, 22 and 27 analyzing the signals obtained with these sensors and if necessary feeding back a correction signal to the primary control system. The advantage of the supplementary pressure sensor 27 over displacement sensor 21 which measures the displacement of membrane 16 is the output signal provided by sensor 27 is independent from the pressure in the channel system formed e.g. by chamber 15, channel 18 and chamber 23 in the embodiment shown by Fig. 8, which pressure is measured by sensor 22, and its independence from temperature changes of membrane 16 and its environment, temperature changes which can be caused e.g. by a thermopneumatic actuation of membrane 16.

In addition to one or more micromechanical pipetting modules of the type described above, a micromechanical pipetting device according to the invention comprises control means (not represented in the enclosed drawings) for controlling the operation of the actuator means 19 in response to an at least one output signal generated by sensor means which produce an output signal representative of or at least related to the displacement of membrane 16 for effecting pipetting operations, such output signals are for instance the output signal of sensor 21 in Figures 2, 8 and 9, the output signal of sensor 22 in Figures 5, 8 and 9, and the output signal of sensor 27 in Figure 10

In the preferred embodiment described above with reference to Figures 1a, 1b, 2 and 3 the control means control the operation of the actuator means 19 in response to the output signal generated by sensor means 21.

In the preferred embodiment described above with reference to Figures 4a, 4b, and 5 to 7 the control means control the operation of the actuator means 19 in response to the output signal generated by sensor means 22.

In the preferred embodiments described above with reference to Figures 8 and 9 the control means control the operation of the actuator means 19 in response to the output signals generated by sensor means 21 and 22.

In the preferred embodiment described above with reference to Figures 10 the control means control the operation of the actuator means 19 in response to the output signals generated by sensor means 21, 22 and 27.

In a preferred embodiment of the invention the micropipetting module 11 and the means for controlling the operation of the actuator means 19 are so configured and dimensioned that the total volume to be aspired and dispensed with the pipetting tip 13 is aspired into the pipetting tip 13 by means of a single stroke of the displacement movement of the membrane 16.

The control means for controlling the operation of the actuator means 19 may be at least partially integrated in the structure of a micropipetting module according to the invention or they may be partially or to a large extent located outside the micropipetting module.

According to a further aspect of the invention several sensors like 21, 22 and 27 optimized for different measuring ranges can be integrated into a compact micropipetting module according to the invention.

According to a further aspect of the invention combined use of the output signals provided by sensors like 21, 22 and 27 improves the reliability in the interpretation of the signals provided by the sensors and enables active liquid dispense check which is important in order to avoid malfunctions of the micropipetting module, which can occur for instance due to clotting of the pipetting tip. Pipetting of air bubbles, which has to be avoided in medical diagnosis tests, can be detected by the use of pressure sensors, before the test is performed. Processing of information obtained with the pressure sensors during aspiration of the sample allows recognition of highly viscous patient samples. These pathogen samples often represent a problem for the correct interpretation of medical test results.

According to a further aspect of the invention a plurality of micromechanical pipetting modules like the above described modules 11 or 41 are integrally built on a silicon wafer 14.

According to a further aspect of the pipetting tip 13 is a silicon pipetting tip integrally built with the pipetting module 11 or 41.

## Claims

1. A micromechanical pipetting device for pipetting liquid volumes in a range between a minimum value smaller than a microliter and a maximum value of about 10 microliters comprising
an integrally built pipetting module (11) which has an inlet/outlet (12) which is either apt to be connected to a removable pipetting tip (13) or is integrally built with a pipetting tip (13), said integrally built pipetting module (11) comprising a micromechanical structure which is integrally built on a silicon wafer (14) and which comprises
a) a first chamber (15) located within said pipetting module (11), the volume comprised within said first chamber (15) being apt to be modified by displacement of a membrane (16) which is a portion of a wall of said chamber, said first chamber (15) having only one opening (17), said opening being permanently open and allowing fluid flow into and from the interior of said first chamber (15),
b) a channel (18) located within said pipetting module (11), said channel (18) establishing a direct, valveless and permanent fluidical connection between said opening (17) of the first chamber (15) and the inlet/outlet (12) of the pipetting module (11),
c) actuator means (19) for displacing said membrane (16), and thereby aspiring or expelling a volume of air or of a liquid into or from said first chamber (15), which in turn causes aspiring or expelling a volume of a liquid sample into respectively from said pipetting tip (13), and **characterized in that** it further comprises
d) first sensor means (21) for generating at least a first output signal related to the displacement of the membrane (16).

2. A micromechanical pipetting device according to claim 1, which further comprises control means for controlling the operation of the actuator means (19) in response to the first output signal generated by the first sensor means (21).

3. A micromechanical pipetting device according to claim 2, wherein the micropipetting module (11) and the means for controlling the operation of the actuator means (19) are so configured and dimensioned that the total volume to be aspired and dispensed with the pipetting tip (13) is aspired into the pipetting tip (13) by means of a single stroke of the displacement movement of the membrane (16).

4. A micromechanical pipetting device according to claim 1, wherein a portion of the membrane (16) is part of the first sensor means and the first output signal generated by this sensor means is representative of the displacement of the membrane (16).

5. A micromechanical pipetting device according to claim 1, wherein a portion of the channel (18) is part of the first sensor means and the first output signal generated by this sensor means is related to the displacement of the membrane (16).

6. A micromechanical pipetting device according to claims 1 or 4, wherein
- a portion of the channel (18) forms a second chamber (23) and is part of a second sensor means (22) for generating a second output signal representative of the pressure in the channel (18), and
- the means for controlling the operation of the actuator means (19) control the actuator means in response to both the first and the second output signals.

7. A micromechanical pipetting device according to claims 1 or 4, wherein
- a portion of the channel (18) forms a second chamber (23) and is part of a second sensor means (22) for generating a second output signal representative of the fluid flow through the channel (18), and
- the means for controlling the operation of the actuator means (19) control the actuator means in response to both the first and the second output signals.

8. A micromechanical pipetting device according to claims 1 or 4 comprising sensor means (27) for generating an output signal representative of the pressure in a chamber (51) in which components of actuator means (19)are located.

9. A micromechanical pipetting device according to one of the preceding claims, wherein a portion of the channel (18) forms a third chamber (24) which is located between the pipetting tip (13) and the first or the second sensor means (21, 22), said third chamber (24) serving for preventing that pipetted fluid may contact the portion of the channel (18) which comprises said first sensor means or said second sensor means.

10. A micromechanical pipetting device according to one of the preceding claims, wherein said actuator means (19) comprises an electrostatic actuator or a piezoelectric actuator.

11. A micromechanical pipetting device according to one of the preceding claims, wherein said membrane (16) is displaced by thermopneumatic means.

12. A micromechanical pipetting device according to one of the preceding claims, wherein said first sensor means (21) is a capacitive or an electro-optical sensor.

13. A micromechanical pipetting device according to one of the preceding claims, wherein said second sensor means (22) comprises a pressure or a flow measurement sensor.

14. A micromechanical pipetting device according to one of the preceding claims, wherein a plurality of said pipetting modules (11) is integrally built on a silicon wafer (14).

15. A micromechanical pipetting device according to one of the preceding claims, wherein the pipetting tip (13) is a silicon pipetting tip integrally built with the pipetting module (11).

## Patentansprüche

1. Mikromechanische Pipettiervorrichtung zum Pipettieren von Flüssigkeitsvolumina in einem Bereich zwischen einem Minimalwert kleiner als 1 Mikroliter und einem Maximalwert von etwa 10 Mikrolitern, umfassend
ein integral gebautes Pipettiermodul (11), das einen Einlass/Auslass (12) aufweist, welcher entweder geeignet ist, mit einer abnehmbaren Pipettenspitze (13) verbunden zu sein oder der integral mit einer Pipettenspitze (13) gebaut ist, wobei das integral gebaute Pipettiermodul (11) eine mikromechanische Struktur umfasst, die integral auf einem Siliziumwafer (14) aufgebaut ist und die umfasst:
(a) eine erste Kammer (15), die innerhalb des Pipettiermoduls (11) befindlich ist, wobei das von der ersten Kammer (15) umfasste Volumen dazu geeignet ist, durch Verrücken einer Membran (16) verändert zu werden, die ein Teil einer Wand der Kammer ist, wobei die erste Kammer (15) nur eine Öffnung (17) aufweist, welche permanent offen ist und es Fluid gestattet, in das Innere der ersten Kammer (15) hinein oder aus ihr heraus zu fließen,
(b) einen Kanal (18), der innerhalb des Pipettiermoduls (11) angeordnet ist, wobei der Kanal (18) eine direkte, ventilfreie und permanente Fluidverbindung zwischen der Öffnung (17) der ersten Kammer (15) und dem Einlass/Auslass (12) des Pipettiermoduls (11) herstellt,
(c) Betätigungsmittel (19) zum Verrücken der Membran (16) und dadurch zum Ansaugen oder Ausstoßen eines Volumens an Luft oder einer Flüssigkeit in die oder aus der ersten Kammer (15), was wiederum Ansaugen oder Ausstoßen eines Volumens einer Flüssigkeitsprobe in die Pipettenspitze (13) hinein bzw. aus ihr heraus verursacht und **dadurch gekennzeichnet, dass** sie weiterhin umfasst:
(d) Sensormittel (21) zum Erzeugen zumindest eines ersten auf die Verrückung der Membran (16) bezogenen Ausgangssignals.

2. Mikromechanische Pipettiervorrichtung gemäß Anspruch 1, die weiterhin Steuermittel zum Steuern des Betriebs des Betätigungsmittels (19) in Reaktion auf das durch das ersten Sensormittel (21) erzeugte erste Ausgangssignal aufweist.

3. Mikromechanische Pipettiervorrichtung gemäß Anspruch 2, wobei das Mikropipettiermodul (11) und das Mittel zum Steuern des Betriebs des Betätigungsmittels (19) so ausgelegt und dimensioniert sind, dass das mit der Pipettenspitze (13) anzusaugende und abzugebende Gesamtvolumen vermittels eines einzelnen Hubs der Verrückungsbewegung der Membran (16) in die Pipettenspitze (13) angesaugt wird.

4. Mikromechanische Pipettiervorrichtung gemäß Anspruch 1, wobei der Bereich der Membran (16) Teil des ersten Sensormittels ist und das durch dieses Sensormittel erzeugte erste Ausgangssignal für die Verrückung der Membran (16) repräsentativ ist.

5. Mikromechanische Pipettiervorrichtung gemäß Anspruch 1, wobei ein Bereich des Kanals (18) Teil des ersten Sensormittels ist und das sich bei von diesem Sensormittel erzeugte erste Ausgangssignal auf die Verrückung der Membran (16) bezieht.

6. Mikromechanische Pipettiervorrichtung gemäß Anspruch 1 oder 4, wobei
- ein Bereich des Kanals (18) eine zweite Kammer (23) ausbildet und Teil eines zweiten Sensormittels (22) zum Erzeugen eines zweiten Ausgangssignals ist, welches für den Druck im Kanal (18) repräsentativ ist, und
- das Mittel zum Steuern des Betriebs des Betätigungsmittels (19) das Betätigungsmittel in Reaktion auf sowohl das erste als auch das zweite Ausgangssignal steuert.

7. Mikromechanische Pipettiervorrichtung gemäß Anspruch 1 oder 4, wobei
- ein Bereich des Kanals (18) eine zweite Kammer (23) bildet und Teil eines zweiten Sensormittels (22) zum Erzeugen eines zweiten Ausgangssignals ist, das für den Fluidfluss durch den Kanal (18) repräsentativ ist und
- das Mittel zum Steuern des Betriebs des Betätigungsmittels (19) das Auslösemittel in Reaktion auf sowohl das erste als auch das zweite Ausgangssignal steuert.

8. Mikromechanische Pipettiervorrichtung gemäß Anspruch 1 oder 4, umfassend Sensormittel (27) zum Erzeugen eines Ausgangssignals, das für den Druck in einer Kammer (51), in welcher Bestandteile des Betätigungsmittels (19) untergebracht sind, repräsentativ ist.

9. Mikromechanische Pipettiervorrichtung gemäß einem der vorstehenden Ansprüche, wobei ein Bereich des Kanals (18) eine dritte Kammer (24) bildet, die zwischen der Pipettenspitze (13) und dem ersten oder zweiten Sensormittel (21, 22) angeordnet ist, und die dritte Kammer (23) dazu dient, zu verhindern, dass pipettiertes Fluid den Bereich des Kanals (18) berührt, der das erste Sensormittel oder das zweite Sensormittel umfasst.

10. Mikromechanische Pipettiervorrichtung gemäß einem der vorstehenden Ansprüche, wobei das Betätigungsmittel (19) einen elektrostatischen Auslöser oder einen piezoelektrischen Auslöser umfasst.

11. Mikromechanische Pipettiervorrichtung gemäß einem der vorstehenden Ansprüche, wobei die Membran (16) durch ein thermopneumatisches Mittel verrückt ist.

12. Mikromechanische Pipettiervorrichtung gemäß einem der vorstehenden Ansprüche, wobei das erste Sensormittel (21) ein kapazitativer oder ein elektrooptischer Sensor ist.

13. Mikromechanische Pipettiervorrichtung gemäß einem der vorstehenden Ansprüche, wobei das zweite Sensormittel (22) einen Druck- oder einen Flussmessungssensor umfasst.

14. Mikromechanische Pipettiervorrichtung gemäß einem der vorstehenden Ansprüche, wobei eine Mehrzahl der Pipettiermodule (11) integral auf einem Siliziumwafer (14) aufgebaut ist.

15. Mikromechanische Pipettiervorrichtung gemäß einem der vorstehenden Ansprüche, wobei die Pipettenspitze (13) eine Siliziumpipettenspitze ist, die integral mit dem Pipettiermodul (11) aufgebaut ist.

## Revendications

1. Dispositif de pipetage micromécanique pour pipeter des volumes de liquide dans une gamme allant d'une valeur minimale plus petite qu'un microlitre et une valeur maximale d'environ 10 microlitres, comprenant
un module de pipetage intégralement construit (11) qui a une entrée/sortie (12) qui est soit susceptible d'être raccordée à un bout de pipetage mobile (13), soit qui est intégralement construite avec un bout de pipetage (13), ledit module de pipetage intégralement construit (11) comprenant une structure micromécanique qui est intégralement construite sur une tranche en silicone (14) et qui comprend
a) une première chambre (15) située à l'intérieur dudit module de pipetage (11), le volume compris à l'intérieur de ladite première chambre (15) étant susceptible d'être modifié par déplacement d'une membrane (16) qui est une partie d'une paroi de ladite chambre, ladite première chambre (15) ayant une seule ouverture (17), ladite ouverture étant en permanence ouverte et permettant l'écoulement de fluide dans et depuis l'intérieur de ladite première chambre (15),
b) une conduite (18) située à l'intérieur dudit module de pipetage (11), ladite conduite (18) établissant une connexion fluidique, permanente et sans valve, directe entre ladite ouverture (17) de la première chambre (15) et l'entrée/sortie (12) du module de pipetage (11),
c) un moyen actionneur (19) pour déplacer ladite membrane (16) et, de ce fait, aspirer ou expulser un volume d'air ou d'un liquide dans ou de ladite première chambre (15), qui, à son tour, cause l'aspiration ou l'expulsion d'un volume d'un échantillon liquide dans ledit, respectivement dudit embout de pipetage (13) et
**caractérisé en ce qu'**il comprend en outre
d) un premier moyen senseur (21) pour générer au moins un premier signal de sortie lié au déplacement de la membrane (16).

2. Dispositif de pipetage micromécanique selon la revendication 1, qui comprend, en outre, un moyen de commande pour commander le fonctionnement du moyen actionneur (19) en réponse au premier signal de sortie généré par le premier moyen senseur (21).

3. Dispositif de pipetage micromécanique selon la revendication 2, dans lequel le module de micropipetage (11) et le moyen pour commander le fonctionnement du moyen actionneur (19) sont configurés et dimensionnés de façon à ce que le volume total devant être aspiré et distribué avec le bout de pipetage (13) est aspiré dans le bout de pipetage (13) au moyen d'une simple course du mouvement de déplacement de la membrane (16).

4. Dispositif de pipetage micromécanique selon la revendication 1, dans lequel une partie de la membrane (16) fait partie du premier moyen senseur et le premier signal de sortie généré par ce moyen senseur est représentatif du déplacement de la membrane (16).

5. Dispositif de pipetage micromécanique selon la revendication 1, dans lequel une partie de la conduite (18) fait partie du premier moyen senseur et le premier signal de sortie généré par ce moyen senseur est lié au déplacement de la membrane (16).

6. Dispositif de pipetage micromécanique selon les revendications 1 ou 4, dans lequel
- une partie de la conduite (18) forme une seconde chambre (23) et fait partie d'un second moyen senseur (22) pour générer un second signal de sortie représentatif de la pression dans la conduite (18) et
- le moyen pour commander le fonctionnement du moyen actionneur (19) commande le moyen actionneur en réponse à la fois au premier et au second signaux de sortie.

7. Dispositif de pipetage micromécanique selon les revendication 1 ou 4, dans lequel
- une partie de la conduite (18) forme une seconde chambre (23) et fait partie d'un second moyen senseur (22) pour générer un second signal de sortie représentatif de l'écoulement de fluide à travers la conduite (18) et
- le moyen pour commander le fonctionnement du moyen actionneur (19) commande le moyen actionneur en réponse à la fois au premier et au second signaux de sortie.

8. Dispositif de pipetage micromécanique selon les revendications 1 ou 4, comprenant un moyen senseur (27) pour générer un signal de sortie représentatif de la pression dans une chambre (51) dans laquelle des composants du moyen actionneur (19) sont situés.

9. Dispositif de pipetage micromécanique selon l'une quelconque des revendications précédentes, dans lequel une partie de la conduite (18) forme une troisième chambre (24) qui est située entre le bout de pipetage (13) et le premier ou le second moyen senseur (21, 22), ladite troisième chambre (24) servant pour empêcher que le fluide pipeté puisse contacter la partie de la conduite (18) qui comprend ledit premier moyen senseur ou ledit second moyen senseur.

10. Dispositif de pipetage micromécanique selon l'une quelconque des revendications précédentes, dans lequel ledit moyen actionneur (19) comprend un actionneur électrostatique ou un actionneur piézo-électrique.

11. Dispositif de pipetage micromécanique selon l'une quelconque des revendications précédentes, dans lequel ladite membrane (16) est déplacée par un moyen thermopneumatique.

12. Dispositif de pipetage micromécanique selon l'une quelconque des revendications précédentes, dans lequel ledit premier moyen senseur (21) est un senseur capacitif ou un senseur électro-optique.

13. Dispositif de pipetage micromécanique selon l'une quelconque des revendications précédentes, dans lequel ledit second moyen senseur (22) comprend un senseur de pression ou un senseur de mesure d'écoulement.

14. Dispositif de pipetage micromécanique selon l'une quelconque des revendications précédentes, dans lequel une pluralité desdits modules de pipetage (11) est intégralement construite sur une tranche en silicone (14).

15. Dispositif de pipetage micromécanique selon l'une quelconque des revendications précédentes, dans lequel le bout de pipetage (13) est un bout de pipetage en silicone intégralement construit avec le module de pipetage (11).
